# EUROPEAN PATENT SPECIFICATION

(11) **EP 4 474 799 B1**
(45) Date of publication and mention of the grant of the patent: **08.07.2026**
(21) Application number: 24760610.6
(22) Date of filing: 23.02.2024
(51) Int. Cl.: G01N 1/28, H01M 10/0562, H01M 10/0569, H01M 10/48, H01M 8/00

(54) **METHOD FOR ANALYZING STRUCTURE OF SOLID-STATE ELECTROLYTE FILM**
VERFAHREN ZUR ANALYSE DER STRUKTUR EINES FESTKÖRPERELEKTROLYTFILMS
PROCÉDÉ D'ANALYSE DE STRUCTURE DE FILM D'ÉLECTROLYTE À L'ÉTAT SOLIDE

(30) Priority: 23.02.2023 KR 20230024417
(43) Date of publication of application: 11.12.2024
(73) Proprietor: LG Energy Solution, Ltd., Seoul 07335 (KR); The Regents of the University of California, Oakland, CA 94607-5200 (US)
(72) Inventor: LEE, Jung Pil, Daejeon 34122 (KR); SONG, Min Sang, Daejeon 34122 (KR); LEE, Dong Ju, La Jolla, California 92092 (US); CHEN, Zheng, San Diego, California 92130 (US)
(74) Representative: Goddar, Heinz J.
(86) International application number: PCT/KR2024/002367
(87) International publication number: WO 2024/177421

(56) References cited:
- JP-A- 2010 123 508
- JP-A- 2019 186 201
- JP-A- 2020 205 243
- KR-A- 20160 085 467
- KR-A- 20200 005 870
- KR-A- 20210 093 345
- US-A1- 2021 005 912
- HATZ ANNA-KATHARINA ET AL: "Chemical Stability and Ionic Conductivity of LGPS-Type Solid Electrolyte Tetra-Li 7 SiPS 8 after Solvent Treatment", vol. 4, no. 9, 30 August 2021 (2021-08-30), United States, pages 9932 - 9943, XP093119376, ISSN: 2574-0962, Retrieved from the Internet <URL:https://pubs.acs.org/doi/pdf/10.1021/acsaem.1c01917> DOI: 10.1021/acsaem.1c01917
- LE MONG ANH; KIM DUKJOON: "Solid electrolyte membranes prepared from poly(arylene ether ketone)-g-polyimidazolium copolymer intergrated with ionic liquid for lithium secondary battery", JOURNAL OF POWER SOURCES, vol. 422, 1 January 2019 (2019-01-01), AMSTERDAM, NL, pages 57 - 64, XP085652349, ISSN: 0378-7753, DOI: 10.1016/j.jpowsour.2019.03.038

## Description

### [Technical Field]

The present disclosure relates to a method for analyzing the structure of a solid electrolyte film.

### [Related Art]

Various batteries are being researched to overcome the limitations of current lithium secondary batteries in terms of capacity, safety, power output, enlargement, and miniaturization.

For example, metal-air batteries with significantly higher theoretical capacity compared to lithium secondary batteries; all-solid-state batteries, which do not have the risk of explosion in terms of safety; supercapacitors in terms of power output; NaS batteries or redox flow batteries (RFBs) in terms of large size, and thin film batteries in terms of miniaturization are being continuously researched in academia and industry.

A solid-state battery refers to a battery in which part or all of the liquid electrolyte used in a conventional lithium secondary battery is replaced with a solid one, and safety can be greatly improved by not using flammable solvents in the battery, so that ignition or explosion due to decomposition reactions of the conventional electrolyte does not occur at all. In addition, since Li metal or Li alloy can be used as negative electrode material, it has the advantage of dramatically improving the energy density per mass and volume of the battery.

In particular, among the solid electrolytes in solid-state batteries, mineral-based solid electrolytes can be categorized into sulfide-based and oxide-based solid electrolytes. Currently, the most technologically advanced solid electrolyte is the sulfide-based solid electrolyte, and the ionic conductivity of the solid electrolyte has been developed to the point where materials with ionic conductivity close to that of organic electrolytes are developed.

In recent years, research has been conducted on techniques to analyze the internal structure of solid electrolytes in order to improve the ionic conductivity of solid electrolytes. However, conventional solid electrolytes have low content of the binder, making it difficult to analyze their structures. Even if the structures of solid electrolyte is to be analyzed, the cross-section observed through Scanning Electron Microscope (SEM) images is two-dimensional (2D), which makes it difficult to analyze the three-dimensional structures.

Methods for analyzing sulfide-based solid electrolytes using computational modeling have been developed (see Patent Document 1). However, computational simulation indirectly generates the three-dimensional structure of the sulfide-based solid electrolyte based on the conduction properties of lithium ions, so that only the structure of the sulfide-based solid electrolyte is predicted, and the accuracy of the structure analysis of the binder or pores inside the solid electrolyte film is somewhat reduced.

The present inventors have completed the present disclosure after researching a method for efficiently removing only the solid electrolyte within the solid electrolyte film structure to accurately analyze the solid electrolyte film structure comprising a frame comprising a binder while keeping the solid electrolyte film structure intact.

### [Prior Art Reference]

### [Patent Document]

(Patent Document 1) Korean Publication Patent No. 2019-0123002
ACS Applied Energy Materials, vol. 4, No. 9, pages 9932-9943, discloses a method for analyzing a solid electrolyte film structure comprising the step of dissolving a solid electrolyte film comprising a solid electrolyte in a polar solvent.

US 2021/005912 A1 and JP 2019 186201 A disclose a method for analyzing a solid electrolyte film structure, comprising the steps of immersing a solid electrolyte film in a solvent, wherein the solid electrolyte film comprises a solid electrolyte and a binder, dissolving the solid electrolyte in the solvent, and analyzing the structure of the binder.

### [Detailed Description of the Invention]

### [Technical Problem]

The present disclosure seeks to provide a solid electrolyte film structure analysis method for a solid electrolyte film in which only the solid electrolyte in the solid electrolyte film structure can be efficiently removed, leaving the structure of the film intact, to analyze the structure of the solid electrolyte film, more specifically, the structure of the binder.

### [Technical Solution]

According to a first aspect of the present disclosure, the present disclosure provides a method for analyzing a solid electrolyte film structure, comprising the step of: immersing a solid electrolyte film in a polar solvent, wherein the solid electrolyte film comprises a solid electrolyte and a binder,
dissolving the solid electrolyte in the polar solvent, and
analyzing the structure of the binder by scanning electron microscopy (SEM),
wherein the solid electrolyte comprises at least one selected from a group consisting of a sulfide-based solid electrolyte, a halide-based solid electrolyte and an oxide-based solid electrolyte .

In an embodiment of the present disclosure, the polar solvent comprises at least one selected from a group consisting of water and alcohol.

In an embodiment of the present disclosure, the alcohol is an alcohol with a carbon number of 4 or less.

In an embodiment of the present disclosure, the binder comprises a fibrous binder or a particulate binder.

In an embodiment of the present disclosure, the binder comprises at least one selected from a group consisting of: polytetrafluoroethylene (PTFE), ethylene-vinyl acetate (EVA), styrene-ethylene-butylene-styrene (SEBS), styrene butadiene rubber (SBR), nitrile butadiene rubber (NBR) and hydrogenated nitrile butadiene rubber (HNBR).

In an embodiment of the present disclosure, the polar solvent in the dissolution step is supplied to achieve a concentration of the solid electrolyte to 10 weight % or less.

In an embodiment of the present disclosure, the dissolution step is performed for a period of 5 minutes to 1 hour.

### [Advantageous Effects]

A method for analyzing the structure of a solid electrolyte film according to an embodiment of the present disclosure, by dissolving the solid electrolyte in a solid electrolyte film comprising a solid electrolyte and a binder using a polar solvent that selectively dissolves only the solid electrolyte, effectively removing the solid electrolyte from the solid electrolyte film while leaving the structure of the solid electrolyte film intact by the residual binder.

As the solid electrolyte is removed from within the solid electrolyte film, the internal structure, such as the connectivity of the binders that comprise the solid electrolyte film, can be readily seen.

### [Brief Description of Drawings]

FIG. 1 is a schematic diagram illustrating an analysis process of a solid electrolyte film structure, according to an embodiment.
FIG. 2 is a photograph illustrating the analysis process of a solid electrolyte film structure, according to an embodiment.
FIGS. 3a through 3i are scanning electron microscope (SEM) images of a solid electrolyte film obtained in embodiments and comparative examples.

### [Best Mode for Practicing the Invention]

All of the embodiments provided by the present disclosure can be achieved by the following description. It should be understood that the following description describes a preferred embodiment of the present disclosure and is not necessarily limited to the present disclosure.

For any property described in this specification, if the measurement conditions and methods are not specifically stated, the property shall be measured in accordance with the measurement conditions and methods commonly used by one of ordinary skill in the art.

As used in this specification, the term "structural analysis of a solid electrolyte film" refers to analyzing the structure of the binder, *i.e.,* the frame formed by the binder after removal of the solid electrolyte from a solid electrolyte film comprising the solid electrolyte and the binder. The solid electrolyte film may be fabricated by a wet process or a dry process. The wet process uses a solvent, so there may be some residual solvent in the solid electrolyte film, but the residual amount is negligible, and the dry process does not use a solvent, so the solid electrolyte film consists only of the solid electrolyte and the binder, so removing the solid electrolyte from the solid electrolyte film may mean analyzing the structure of the binder.

### Methods for Analyzing Solid Electrolyte Film Structure

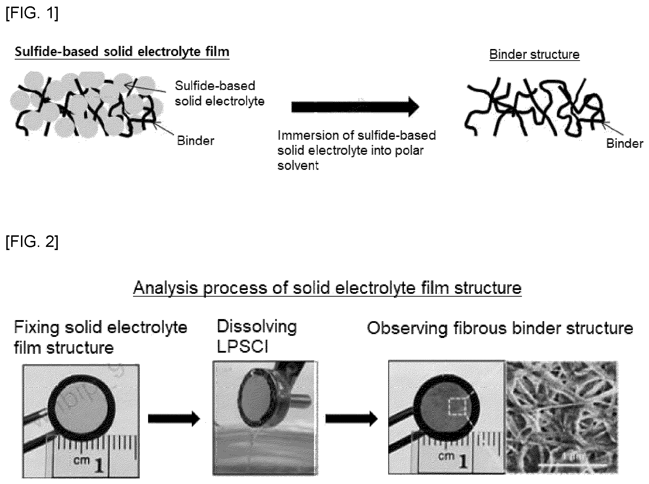

FIG. 1 is a schematic diagram illustrating a method for analyzing a solid electrolyte film structure, according to an embodiment.

Referring to FIG. 1, the present disclosure relates to a method for analyzing a solid electrolyte film structure, which includes the step of dissolving a solid electrolyte film comprising a solid electrolyte and a binder by immersing the solid electrolyte film in a polar solvent. After dissolving the solid electrolyte, a framework comprising the binder can be obtained, which can be used to analyze the solid electrolyte film structure. In FIG. 1, a sulfide-based solid electrolyte film including a sulfide-based solid electrolyte and a fibrous binder is shown as an example, but the present disclosure is not limited thereto.

The method for analyzing a solid electrolyte film structure according to an embodiment of the present disclosure includes a dissolution step of dissolving a solid electrolyte in a solid electrolyte film comprising the solid electrolyte and a binder with a polar solvent. The dissolving step allows for the removal of large chunks of the solid electrolyte that have penetrated into the solid electrolyte film structure. The polar solvent selectively dissolves only the solid electrolyte, but not the binder. According to an embodiment of the present disclosure, the polar solvent may comprise at least one selected from a group consisting of water and alcohol. According to an embodiment of the present disclosure, the alcohol is an alcohol with a carbon number of 4 or less. If the carbon number is too high, the polarity may decrease, reducing its effectiveness as a solvent. Considering the functionality as a solvent and processability of alcohols, ethanol can be desirably utilized.

According to an embodiment of the present disclosure, in the dissolution step, the polar solvent is supplied such that the concentration of the solid electrolyte is 10 weight % or less, 5 weight % or less, 3 weight % or less, or 1 weight % or less. If the concentration of the solid electrolyte in the polar solvent becomes too high, the solubility of the polar solvent may be reduced and the solid electrolyte may not be effectively removed or additional removal processes may be required. Due to the high content of the solid electrolyte in the solid electrolyte film, the removal process can easily be performed in a single step.

In the above process, the dissolution time may be from 5 minutes to 1 hour. If it is less than 5 minutes, the solid electrolyte may remain in the solid electrolyte film, and if it is greater than 1 hour, the process may be less efficient. Specifically, the dissolution time may be 5 minutes or more, 8 minutes or more, or 10 minutes or more, and may be 1 hour or less, 50 minutes or less, or 40 minutes or less. A single dissolution step may be sufficient.

The solid electrolyte may be any solid electrolyte commonly used in the technical field that is soluble in the solvent according to an embodiment of the present disclosure. According to an embodiment of the present disclosure, the solid electrolyte comprises an inorganic solid electrolyte, wherein the inorganic solid electrolyte is a sulfide-based solid electrolyte, a halide-based solid electrolyte, an oxide-based solid electrolyte, or a combination thereof.

The sulfide-based solid electrolyte includes sulfur atoms among the electrolyte components, but is not limited to any particular component, and may include one or more of crystalline solid electrolytes, amorphous solid electrolytes (glassy solid electrolytes), and glass-ceramic solid electrolytes.

The sulfide-based solid electrolyte may be one represented by Formula 1 below:

<Formula 1> Lₐ₁M_{b1}P_{c1}S_{d1}Aₑ₁

In Formula 1 above, L is an element selected from Li, Na and K; M is an element selected from B, Zn, Sn, Si, Cu, Ga, Sb, Al and Ge; A represents I, Br, Cl, or F; and a1-e1 represent the composition ratio of each element, and a1: b1:c1:d1:e1 is 1~12:0~1:1:2~12:0~5.

For example, the sulfide-based solid electrolyte may be LPS-type sulfide containing sulfur and phosphorus, LPSCI-type sulfide, Li₄₋ₓGe₁₋ₓPₓS₄(x is from 0.1 to 2, specifically, x is 3/4, 2/3), Li_{10±1}MP₂X₁₂(M=Ge, Si, Sn, Al, X=S, Se), Li_{3.833}Sn_{0.833}As_{0.166}S₄, Li₄SnS₄, Li_{3.25}Ge_{0.25}P_{0.75}S₄, Li₂S-P₂S₅, B₂S₃-Li₂S, xLi₂S-(100-x)P₂S₅ (x is from 70 to 80), Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, Li₂S-SiS₂-Li₃N, Li₂S-SiS₂-LiI, or Li₂S-B₂S₃-LiI, although not limited thereto. For example, the above LPSCI-type sulfide may be Li₆PS₅Cl.

The halide-based solid electrolyte may be one represented by Formula 2 below:

<Formula 2> Li₆₋₃ₐMₐBr_{b}Cl_{c}

In Formula 2 above, M is a metal other than Li, a is 0<a<2, b is 0≤b≤6, c is 0≤c≤6, and b+c=6.

For example, the halide-based solid electrolyte may include, but is not necessarily limited to, at least one of Li₃YCl₆ and Li₃YBr₆.

The oxide-based solid electrolyte may be that represented by the following Formula 3:

[Formula 3] Li_{1+x+y}AlₓTi₂₋ₓSi_{y}P_{3-y}O₁₂

(In Formula 3 above, x is 0≤ x ≤2 and y is 0≤ y ≤3.)

For example, the above oxide-based solid electrolyte can be suitably selected from LLT-based with a perovskite structure such as Li₃ₓLa_{2/3-x}TiO₃, LISICON such as Li₁₄Zn(GeO₄)₄, LATP-based such as Li_{1.3}Al_{0.3}Ti_{1.7}(PO₄)₃, LAGP-based such as (Li₁₊ₓGe₂₋ₓAlₓ(PO₄)₃), phosphate-based such as LiPON, and the like for use, but is not necessarily limited thereto.

The method for analyzing the solid electrolyte film structure according to an embodiment of the present disclosure can be applied to any solid electrolyte film, provided that the solid electrolyte can be dissolved in a solvent. However, in the wet solid electrolyte film fabrication method in which the solid electrolyte is dissolved in a non-polar solvent with a conductive material and a binder and applied to form a solid electrolyte film structure, the solid electrolyte acts as a support within the solid electrolyte film. Thus, applying the corresponding solid electrolyte film structure analysis method to the solid electrolyte film structure may cause collapse due to dissolution of the solid electrolyte. Therefore, the analysis method for the solid electrolyte film structure can be applied effectively to the solid electrolyte film structure that is fabricated in a dry state by introducing a solid electrolyte into the binder, and the solid electrolyte film structure is sufficiently supported solely by the binder.

Further, the binder may be a fibrous binder or a particulate binder. The fibrous binder may be in the form of a solid electrolyte incorporated into a solid electrolyte fabricated by physically mixing the binder with the solid electrolyte during a dry process. During the dry process, the binder may be fibrillized by physically mixing to become a fibrous binder.

The binders may include one or more selected from a group consisting of polytetrafluoroethylene (PTFE), ethylene-vinyl acetate (EVA), styrene-ethylene-butylene-styrene (SEBS), styrene butadiene rubber (SBR), nitrile butadiene rubber (NBR), and hydrogenated nitrile butadiene rubber (HNBR).

### [Mode for Practicing the Invention]

Hereinafter, preferred examples are presented to facilitate the understanding of the present disclosure, but the following examples are provided to facilitate the understanding of the present disclosure, and the present disclosure is not limited to the examples.

**[Table 1]**

| | Solid electrolyte | Binders | Weight Ratio (solid electrolyte: binder) | Solvent | Concentration (weight %) | Time (min) |
|---|---|---|---|---|---|---|
| Example 1 | Li₆PS₅Cl | SEBS | 97:3 | Water | 1 | 10 |
| Example 2 | Li₆PS₅Cl | SEBS | 97:3 | Ethanol | 1 | 10 |
| Example 3 | Li₆PS₅Cl | SEBS | 97:3 | Water | 3 | 20 |
| Example 4 | Li₆PS₅Cl | SEBS | 97:3 | Water | 1 | 30 |
| Example 5 | Li₆PS₅Cl | SEBS | 98:2 | Water | 1 | 10 |
| Example 6 | Li₆PS₅Cl | EVA | 97:3 | Water | 1 | 10 |
| Example 7 | Li₆PS₅Cl | PTFE | 99.5:0.5 | Water | 1 | 10 |
| Example 8 | Li₆PS₅Cl | SEBS | 97:3 | Water | 3 | 1 |
| Comparative Example 1 | Li₆PS₅Cl | SEBS | 97:3 | - | - | - |
| Comparative Example 2 | Li₆PS₅Cl | PTFE | 99.5:0.5 | - | - | - |

### Examples

### Example 1

### 1-1. Fabrication of a Solid Electrolyte Film

Styrene-ethylene-butylene-styrene (SEBS) particles (Sigma Aldrich, 200557), which is a binder, were dissolved in xylene solvent at 2 weight %, and Li₆PS₅Cl powder, which is a sulfide-based solid electrolyte, was further mixed to fabricate a uniform slurry. The slurry was then coated on a PET release film, dried, and calendared five times with a roll press to produce a solid electrolyte film with a thickness of about 50 µm. The content of the binder in the fabricated solid electrolyte film was 3 weight %.

### 1-2. Analysis of Solid Electrolyte Film Structure

The solid electrolyte film was fixed, and the solid electrolyte in the solid electrolyte film was dissolved for 10 minutes after immersion in a water solvent such that the concentration of the solid electrolyte was 1 weight %. The water solvent was removed from the solid electrolyte film and dried, and the structure of the solid electrolyte film obtained was analyzed (FIG. 2).

### Example 2

The same method was used as in Example 1, except that ethanol solvent was used instead of water solvent.

### Example 3

The same method was used as in Example 1, except that the water solvent was immersed so that the concentration of the solid electrolyte was 3 weight %, and the dissolution time was 20 minutes.

### Example 4

The same method was used as in Example 1, except that the dissolution time was 30 minutes.

### Example 5

The same method was used as in Example 1, except for the content of the binder being 2 weight % in the solid electrolyte film.

### Example 6

The same method was used as in Example 1, except for using EVA (ethylene-vinyl acetate, Sigma Aldrich, 340502) particles instead of SEBS particles as the binder.

### Example 7

A mixture obtained by mixing PTFE (polytetrafluoroethylene) particles (Chemours) as a binder with Li₆PS₅Cl powder, a sulfide-based solid electrolyte, was calendared five times using a roll press to fabricate a solid electrolyte film with a thickness of 300 µm. The content of the binder in the fabricated solid electrolyte film was set to 0.5 weight %.

### Example 8

The same method was used as in Example 3, except for conducting a solvent treatment for 1 minute on the manufactured solid electrolyte film.

### Comparative Example 1

The solid electrolyte film fabricated in Example 1 was prepared without solvent treatment.

### Comparative Example 2

The solid electrolyte film fabricated in Example 7 was prepared without solvent treatment.

### Experimental Example 1: Analysis of Solid electrolyte Film Structure

The structure of the solid electrolyte films obtained from the examples and comparative examples were analyzed using SEM (Thermo Scientific, FEI Apreo SEM).

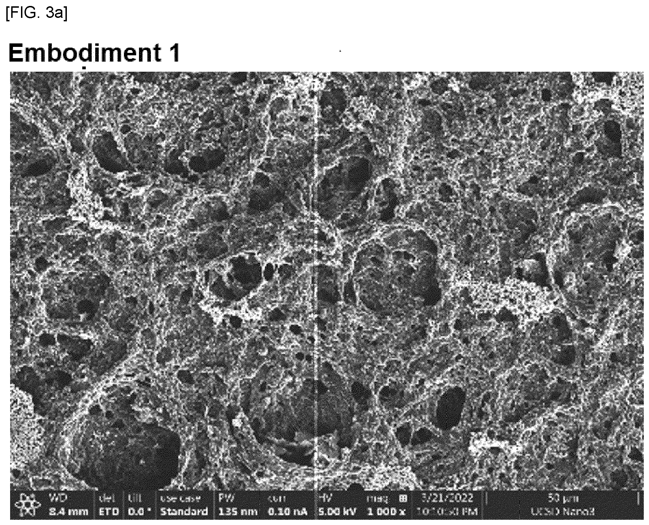

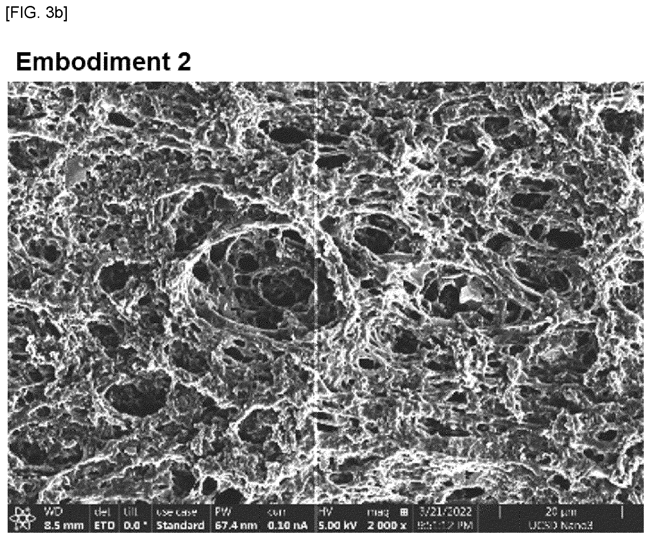

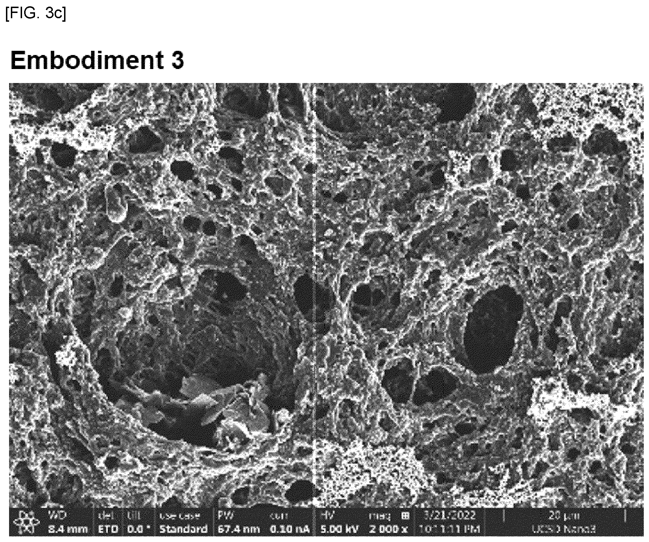

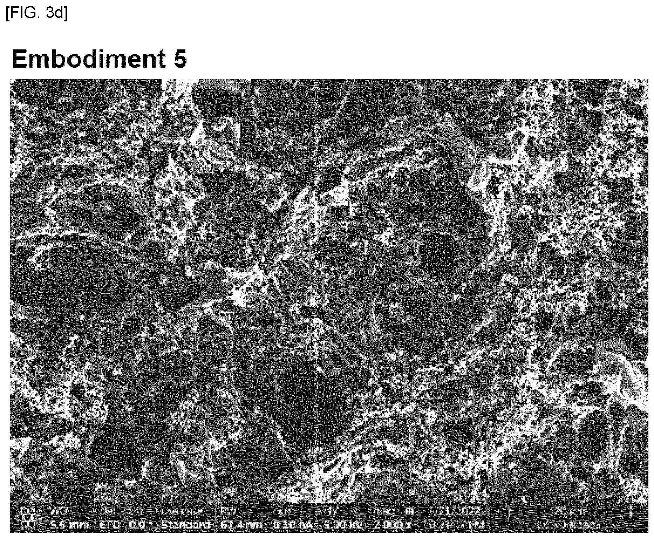

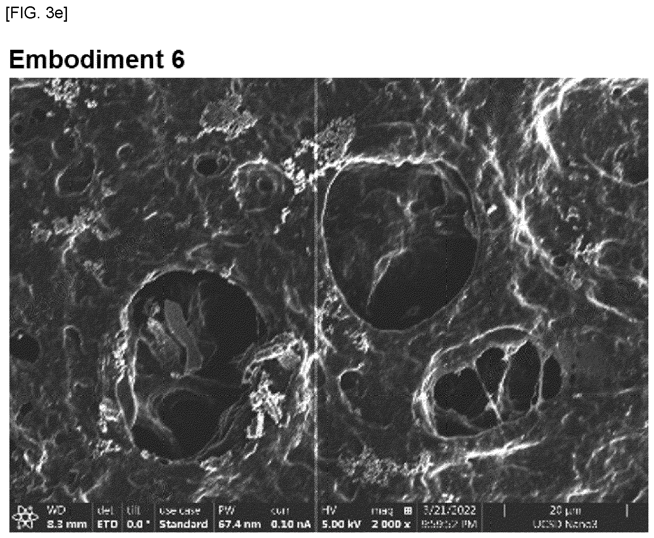

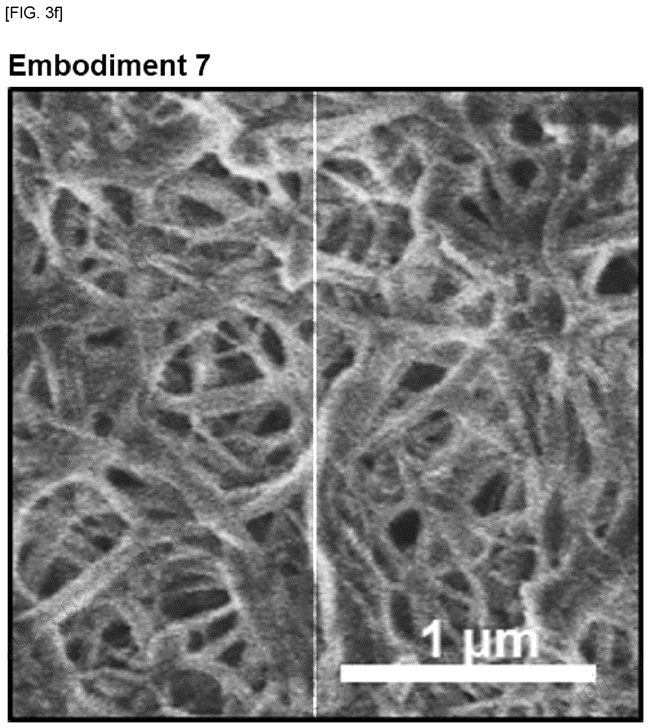

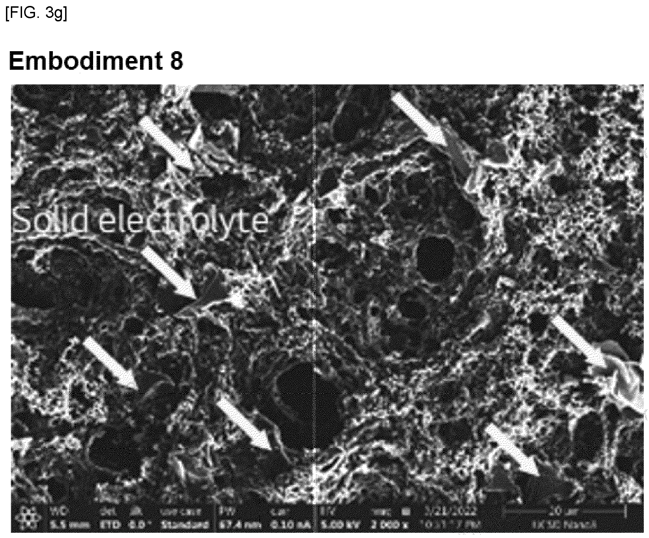

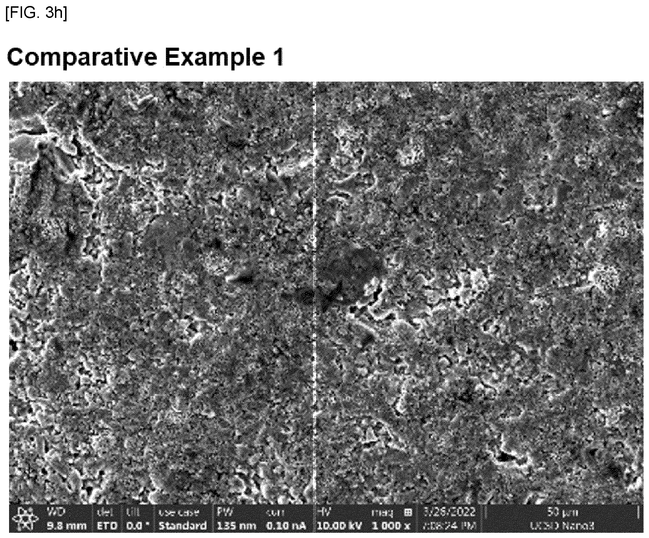

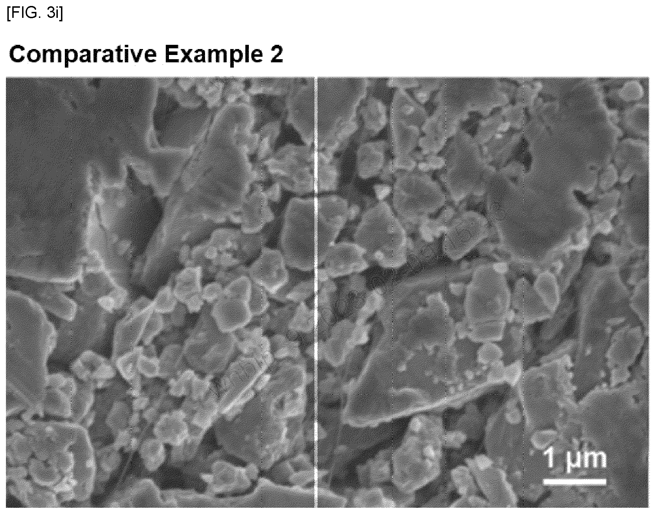

FIGS. 3a through 3i are SEM images of solid electrolyte films obtained from the examples and comparative examples.

Referring to FIGS. 3a through 3i, it can be seen that in the solid electrolyte film of the examples, only the binder frame was clearly visible after the solid electrolyte was removed. In particular, it can be seen that regardless of the structure of the binder and the fabrication method for the solid electrolyte film, the solid electrolyte contained in the solid electrolyte film was removed using water or ethanol. However, in Example 8, where the dissolution time was relatively short, it can be seen that some solid electrolyte remain.

On the other hand, it can be seen that for the solid electrolyte film of the comparative examples, the solid electrolyte dissolution step is not performed, making it difficult to identify the binder structure.

## Claims

1. A method for analyzing a solid electrolyte film structure, comprising the steps of:
immersing a solid electrolyte film in a polar solvent, wherein the solid electrolyte film comprises a solid electrolyte and a binder,
dissolving the solid electrolyte in the polar solvent, and
analyzing the structure of the binder by scanning electron microscopy (SEM),
wherein the solid electrolyte comprises at least one selected from a group consisting of a sulfide-based solid electrolyte, a halide-based solid electrolyte and an oxide-based solid electrolyte.

2. The method for analyzing a solid electrolyte film structure according to claim 1,
wherein the polar solvent comprises at least one selected from a group consisting of water and alcohol.

3. The method for analyzing a solid electrolyte film structure according to claim 2,
wherein the alcohol is an alcohol with a carbon number of 4 or less.

4. The method for analyzing a solid electrolyte film structure according to claim 1,
wherein the binder comprises a fibrous binder or a particulate binder.

5. The method for analyzing a solid electrolyte film structure according to claim 1, wherein the binder comprises at least one selected from a group consisting of:
polytetrafluoroethylene (PTFE), ethylene-vinyl acetate (EVA), styrene-ethylene-butylene-styrene (SEBS), styrene butadiene rubber (SBR), nitrile butadiene rubber (NBR) and hydrogenated nitrile butadiene rubber (HNBR).

6. The method for analyzing a solid electrolyte film structure according to claim 1,
wherein the polar solvent in the dissolution step is supplied to achieve a concentration of the solid electrolyte to 10 weight % or less.

7. The method for analyzing a solid electrolyte film structure according to claim 1, wherein the dissolution step is performed for a period of 5 minutes to 1 hour.

## Patentansprüche

1. Verfahren zum Analysieren einer Festelektrolytfilmstruktur, umfassend die Schritte:
Eintauchen eines Festelektrolytfilms in ein polares Lösungsmittel, wobei der Festelektrolytfilm einen Festelektrolyten und ein Bindemittel umfasst,
Auflösen des Festelektrolyten in dem polaren Lösungsmittel, und
Analysieren der Struktur des Bindemittels durch Rasterelektronenmikroskopie (REM),
wobei der Festelektrolyt mindestens einen ausgewählt aus einer Gruppe bestehend aus einem Festelektrolyten auf Sulfidbasis, einem Festelektrolyten auf Halogenidbasis und einem Festelektrolyten auf Oxidbasis umfasst.

2. Verfahren zum Analysieren einer Festelektrolytfilmstruktur nach Anspruch 1, wobei das polare Lösungsmittel mindestens eines ausgewählt aus einer Gruppe bestehend aus Wasser und Alkohol umfasst.

3. Verfahren zum Analysieren einer Festelektrolytfilmstruktur nach Anspruch 2, wobei der Alkohol ein Alkohol mit einer Kohlenstoffzahl von 4 oder weniger ist.

4. Verfahren zum Analysieren einer Festelektrolytfilmstruktur nach Anspruch 1, wobei das Bindemittel ein faseriges Bindemittel oder ein teilchenförmiges Bindemittel umfasst.

5. Verfahren zum Analysieren einer Festelektrolytfilmstruktur nach Anspruch 1, wobei das Bindemittel mindestens eines ausgewählt aus einer Gruppe bestehend aus:
Polytetrafluorethylen (PTFE), Ethylenvinylacetat (EVA), Styrol-Ethylen-Butylen-Styrol (SEBS), Styrol-Butadien-Kautschuk (SBR), Nitril-Butadien-Kautschuk (NBR) und hydriertem Nitril-Butadien-Kautschuk (HNBR) umfasst.

6. Verfahren zum Analysieren einer Festelektrolytfilmstruktur nach Anspruch 1, wobei das polare Lösungsmittel in dem Auflösungsschritt zugeführt wird, um eine Konzentration des Festelektrolyten von 10 Gew.-% oder weniger zu erreichen.

7. Verfahren zum Analysieren einer Festelektrolytfilmstruktur nach Anspruch 1, wobei der Auflösungsschritt für einen Zeitraum von 5 Minuten bis 1 Stunde durchgeführt wird.

## Revendications

1. Procédé d'analyse de la structure d'un film d'électrolyte solide, comprenant les étapes suivantes :
immersion d'un film d'électrolyte solide dans un solvant polaire, où le film d'électrolyte solide comprend un électrolyte solide et un liant,
dissolution de l'électrolyte solide dans le solvant polaire et
analyse de la structure du liant par microscopie électronique à balayage (MEB),
où l'électrolyte solide comprend au moins un sélectionné dans un groupe consistant en un électrolyte solide à base d'un sulfure, un électrolyte solide à base d'un halogénure et un électrolyte solide à base d'un oxyde.

2. Procédé d'analyse de la structure d'un film d'électrolyte solide selon la revendication 1, où le solvant polaire comprend au moins un sélectionné dans un groupe consistant en l'eau et un alcool.

3. Procédé d'analyse de la structure d'un film d'électrolyte solide selon la revendication 2, où l'alcool est un alcool ayant un nombre de carbones inférieur ou égal à 4.

4. Procédé d'analyse de la structure d'un film d'électrolyte solide selon la revendication 1, où le liant comprend un liant fibreux ou un liant particulaire.

5. Procédé d'analyse de la structure d'un film d'électrolyte solide selon la revendication 1, où le liant comprend au moins un sélectionné dans un groupe consistant en les suivants :
polytétrafluoroéthylène (PTFE), éthylène-acétate de vinyle (EVA), styrène-éthylène-butylène-styrène (SEBS), caoutchouc styrène-butadiène (SBR), caoutchouc nitrile-butadiène (NBR) et caoutchouc nitrile hydrogéné-butadiène (HNBR).

6. Procédé d'analyse de la structure d'un film d'électrolyte solide selon la revendication 1 où, à l'étape de dissolution, le solvant polaire est utilisé de manière à atteindre une concentration en l'électrolyte solide inférieure ou égale à 10 % en poids.

7. Procédé d'analyse de la structure d'un film d'électrolyte solide selon la revendication 1, où l'étape de dissolution est effectuée sur une période qui va de 5 minutes à 1 heure.
